# EUROPEAN PATENT APPLICATION

(11) **EP 1 225 265 A1**
(43) Date of publication of application: **24.07.2002**
(21) Application number: 02001295.1
(22) Date of filing: 18.01.2002
(51) Int. Cl.: D04H 13/00, E04D 5/10, E04D 11/02, B32B 5/26, B32B 31/00, D06N 5/00, D04H 13/02

(54) **Vapor-permeable and water-resistant sheet and method of manufacturing the same**

(30) Priority: 23.01.2001 JP 2001014524
(71) Applicant: NIPPON PETROCHEMICALS COMPANY, LIMITED, Chiyoda-ku, Tokyo (JP)
(72) Inventor: Sano, Eiichi, Inba-gun, Chiba (JP); Sakamoto, Keiji, Sagamihara-shi, Kanagawa (JP)
(74) Representative: Luderschmidt, Schüler & Partner GbR

(57) **Abstract**

A vapor-permeable and water-resistant sheet (1) is provided with a film layer (13) having vapor permeability and water-resistance, a spun bonded nonwoven fabric (12) laminated onto one surface of the film layer and a reinforcement layer (11) laminated onto the other surface of the film layer. The basis weight of the spun bonded nonwoven fabric is 20g/m² through 70g/m². The reinforcement layer has a reticular construction, and thus does not deteriorate vapor permeability and water-resistance of the film layer.

## Description

### BACKGROUND OF THE INVENTION

### 1. Field of the Invention

The present invention relates to a vapor-permeable and water-resistant sheet having vapor-permeable and water-resistant properties and adapted for being used as a roofing material, and a method of manufacturing the same.

### 2. Description of the Related Art

Conventionally, when a house for residence and the like is built, under roof tiles or colorbestos, which are in contact with the open air, a waterproof sheet made of asphalt-based material as a roofing material is laid over to prevent the wind and the rain from penetrating from the outside into the inside of the house through the roof. However, in the house having this construction, during either a season, especially a winter season, in which the temperature outside the house is lower than that inside the house or a humid season, the air inside the house is cooled down due to the waterproof sheet, which is apt to be affected by the outside atmosphere, and as a result dew condensation often occurs on the waterproof sheet. Dewdrops generated by the dew condensation usually either cause corrosion of various structural elements of the roof or invite breeding of various kinds of minor germs and vermin, and accordingly cause reduction in the durability of the house.

Therefore, instead of roofing material made of the asphalt-based material, another roofing material made of a spun bonded nonwoven fabric, which is light in weight water resistant and vapor-permeable, has been developed. The roofing material of the spun bonded nonwoven fabric is fabricated by sandwiching a vapor-permeable porous film of polyolefin between the spun bonded nonwoven fabrics and bonding them by compression. This roofing material prevents penetration of the wind and the rain from the outside of a house, and exhibits such an advantageous effect that any water vapor, which might stagnate in an attic, is vented toward the atmosphere. Thus, it can contribute to a large enhancement of the durability of the house. Also, the roofing material of the spun bonded nonwoven fabric is very light in weight in comparison with that of the asphalt-based material, and therefore can be easily laid.

Generally, the roofing material requires having higher nail strength, which indicates the strength in fast to a constructional member upon being fastened by a nailing machine or a nailing tool during the laying operation and having a higher tensile strength for preventing the material from being torn or broken during the laying operation. Nevertheless, the nail strength and the tensile strength of the roofing material made of the spun bonded nonwoven fabric can be increased only by increasing the basis weight of the nonwoven fabric, in view of the structure of the nonwoven fabric.

Further, the bonding of the polyolefin base porous film and the spun bonded nonwoven fabrics by compression without losing the breathability and the vapor permeability can be effectively achieved by adhesion by the use of embossing rolls. However, when the spun bonded nonwoven fabrics are bonded by compression to the opposite faces of the polyolefin base porous film, a lot of breathability and vapor permeability of the porous film must be lost.

### SUMMARY OF THE INVENTION

It is an object of the present invention to provide a vapor-permeable and water -resistant sheet adapted for being used as a roofing material, which can exhibit excellent vapor permeability and water resistance, and a large mechanical strength in spite of rather small basis weight thereof, and also to provide a method of manufacturing the same.

In order to achieve the above object, the vapor-permeable and waterproof sheet of the present invention comprises a film layer having vapor permeability and water resistance, a surface protection layer laminated on one surface of the film layer and made of a spun bonded nonwoven fabric having a basis weight of equal to or more than 20 g/m² and equal to or less than 70 g/m², and a reinforcement layer of reticular construction, laminated on the other surface of the film layer.

The vapor-permeable and water-resistant sheet of the present invention, since not the spun bonded nonwoven fabric but the reinforcement layer is laminated on the other surface of the film layer, even if the spun bonded nonwoven fabric laminated on one surface of the film layer is formed of one having a small basis weight thereby lightening the entire weight thereof, necessary mechanical strength of the sheet may be obtained by the reinforcement layer. Further, since the spun bonded nonwoven fabric is laminated on only one surface of the film layer, and since the reinforcement layer has the reticular construction, the breathability and the vapor permeability of the film layer could not be deteriorated.

The vapor-permeable and water-resistant sheet of the present invention may be adapted for being used as a roofing material. Particularly, in that case, the vapor permeability degree of the sheet should preferably be equal to or larger than 1,000 g H₂O/day · m² and the water resistance pressure should preferably be equal to or larger than 500 cm· H₂O. Further, the breathability degree of the sheet should preferably be equal to or larger than 30 s/ 100ml. With regard to the strength, the nail strength should preferably be equal to or larger than 130 N/ 10 cm, and the tensile strength of the sheet should preferably be equal to or larger than 300N / 5 cm.

The fiber constituting the spun bonded nonwoven fabric laminated onto the film layer should preferably be a fiber made of either polypropylene or a copolymer of polypropylene and α-olefin from the viewpoint of spinnable properties. The spun bonded nonwoven fabric may contain therein UV absorbent.

On the other hand, if the film layer is made of a polyolefin base porous film having the breathability of 30 - 3,000 s/100 ml, the vapor permeability degree of 50 - 20,000 g H₂O/day · m², the water resistance pressure of equal to or larger than 500 cm · H₂O, a thickness of 10 - 200 µm, minute pores of which an average diameter is 0.01 - 50 µm, and an porosity of 10 through 70 %, vapor-permeable and water-resistant suitable for permitting the vapor-permeable and water-resistant sheet to be used as a roofing material, may be acquired by the film layer.

Further, if the reinforcement layer laminated on the other surface of the film layer is constituted by polyolefin, a copolymer of polyolefin, polyester, or a copolymer of polyester, a reinforcement layer having reticular construction can be easily formed by subjecting the film to a split-fiber processing for forming fibers by the application of splits to the film. Also, the thickness of the reinforcement layer should preferably be 50 - 300 µm and the basis weight thereof should preferably be 13 - 60 g/m² for acquiring a strength and a lightweight suitable for permitting the vapor-permeable and water-resistant sheet to be used as a roofing material.

A method of manufacturing a vapor-permeable and water-resistant sheet according to the present invention comprises the steps of bonding, by compression, a surface protection layer made of spun bonded nonwoven fabric having a basis weight of equal to or more than 20 g/m² and equal to or less than 70 g/m², on one surface of a film layer having vapor permeability and water resistance, and bonding, by compression, a reinforcement layer of reticular construction on the other surface of the film layer on which the spun bonded nonwoven fabric is laminated. With the method, as described above, the vapor-permeable and water-resistant sheet, which is of lightweight, exhibits sufficient mechanical strength, and can suppress reduction in the breathability and vapor permeability of the film layer, may be easily manufactured.

At least the compression bonding of the protection layer on the film layer out of the compression bonding of the protection layer and the reinforcement layer should preferably be implemented under a temperature, which might not deteriorate the vapor permeability and the breathability of the film layer. When the film layer is made of a polyolefin base porous film, the temperature by which the vapor permeability and water resistance of the film layer are not deteriorated is of equal to or less than 150 °C. Also, for the purpose of more sure suppression of reduction in the vapor permeability and water resistance of the film layer, the compression bonding of the surface protection layer and the reinforcement layer onto the film layer should preferably be carried out by the ultrasonic compression bonding.

The above and other objects, features and advantages of the present invention will become more apparent from the following description, with reference to the ,accompanying stretchings, which illustrate examples of the present invention.

### BRIEF DESCRIPTION OF THE STRETCHINGS

Fig. 1 is a schematic cross-sectional view of a vapor-permeable and water-resistant sheet according to an embodiment of the present invention;
Fig. 2 is a plan view of the split-fiber nonwoven fabric shown in Fig. 1;
Fig. 3a is a partial perspective view of a uniaxially oriented reticular film stretched in a longitudinal direction and constituting the split-fiber nonwoven fabric shown in Fig. 2;
Fig. 3b is an enlarged perspective view, illustrating the cross-sectional construction of the uniaxially oriented reticular film shown in Fig. 3a;
Fig. 4 is a perspective view of the uniaxially orientated reticular film shown in Fig. 3a and illustrating a condition where slits are provided in the original film;
Fig. 5a is a partial perspective view of the uniaxially orientated reticular film stretched in transverse direction;
Fig. 5b is an enlarged perspective view, illustrating the cross-sectional construction of the uniaxially oriented reticular film shown in Fig. 5a;
Fig. 6 is a plan view of a nonwoven fabric, which is another example of a reticular reinforcement layer adaptable for the present invention; and
Fig. 7 is a perspective view of a nonwoven fabric, which is a further example of a reticular reinforcement layer adaptable for the present invention.

### DESCRIPTION OF THE PREFERRED EMBODIMENTS

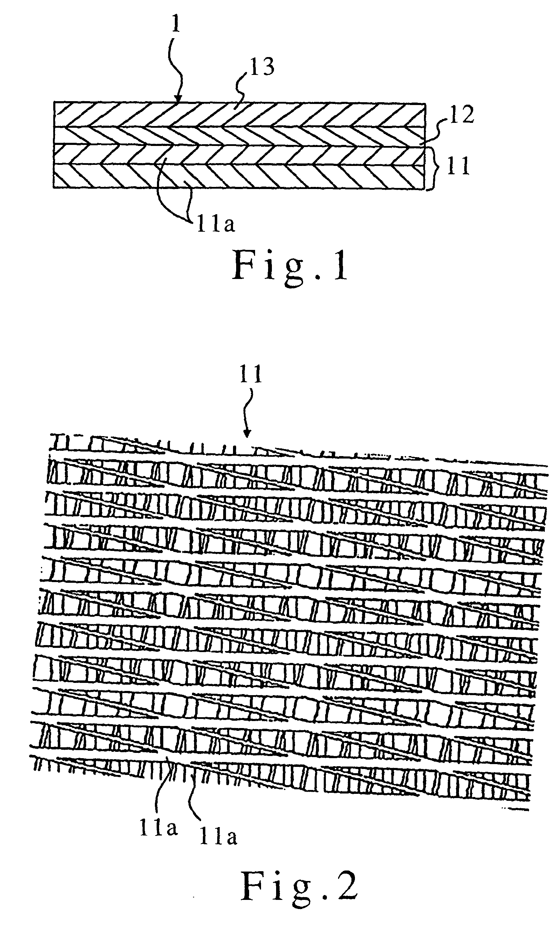

Referring to Fig. 1, vapor-permeable and water-resistant sheet 1 according to an embodiment of the present invention is constituted by film 12 having vapor permeability and water resistance, spun bonded nonwoven fabric 13 bonded to one surface of this film 12 by compression and forming a surface protection layer having vapor permeability, and split-fiber nonwoven fabric 11 bonded to the other surface of film 12 and forming a reticular reinforcement layer.

Spun bonded nonwoven fabric 13 forming the surface protection layer having vapor permeability may be constituted by fibers made of any kind of resin if the fibers could be fabricated by the span-bonding method. The resin used for making the fibers of spun bonded nonwoven fabric 13 might be, for example, any one of polyolefin such as polyethylene and polypropylene, polyester such as polyethyleneterephthalate and polybutyleneterephthalate, polyamide such as nylon 6 ,and nylon 66, and polymer of these chemical substances. Further, the fibers may be formed of either any one or more than two kinds of resin selected from these resins. In these resins, polyolefin is preferably used because of the water-repellent and low price. Particularly, the polypropylene and the copolymer of the polypropylene and the α-olefin each having a high spinnable properties are preferably used. The basis weight of spun bonded nonwoven fabric 13, i.e., the weight per square meter of the fabric should be equal to or more than 20 g/m² and equal to or less than 70 g/m², from the viewpoint of the surface protective function, the vapor permeability, and the light weight of the fabric.

Further, spun bonded nonwoven fabric 13 may contain therein various kinds of additive as far as the surface protective function and the vapor permeability thereof is not deteriorated by containing such additive. As the additive, especially a UV absorbent capable of adding a weather resistance to the fabric may be preferably used. The UV absorbent may be, for example, any one of 2-hydroxy-4-n-octoxybenzophenone, 2-hydroxy-4-dodecyloxybenzophenone, and 2-(2'-hydroxy-3'-tert.-butyl-5'-methylphenyl)-5-chloro-benzotriazole. When spun bonded nonwoven fabric 13 contains therein the UV absorbent, it is possible to prevent the nail strength and the tensile strength of the fabric from deterioration. Also, the containing of the UV absorbent is effective for preventing film 12 from deterioration.

Film 12 has permeability to gases such as air and water vapor, i.e., vapor permeability, and anti-permeability to a liquid (water drop), i.e., water-resistance, and is preferably formed of polyolefin base porous film. However, film 12 is not limited to the polyolefin base porous film, and might be formed of another film selected from a wide range of films as long as such selected film is able to exhibit the above-mentioned various characteristics. Film 12 should preferably have the characteristics of breathability of 30 through 3,000 s/100 ml, vapor permeability of 500 through 20,000 gH₂O/day·m², and water-resistance of equal to or larger than 500 cm·H₂O. Further, film 12 should preferably have a construction such that it has minute pores of which the average diameter is 0.01 - 50µm, an porosity of 10 - 70%, and a thickness of 10 - 200µm. The material of film 12 is not limited to any particular material but should preferably be a polyolefin base resin such as the polyethylene and the polypropylene.

Split-fiber nonwoven fabric 11 used as the reticular reinforcement layer is compounded together with spun bonded nonwoven fabric 13 and film 12 to reinforce these latter elements. Therefore, in order that vapor-permeable and water-resistant sheet 1 retains necessary tensile strength and nail strength, split-fiber nonwoven fabric 11 should have a thickness of 50 - 300 µm and a basis weight of 13 - 60 g/m².

The description of split-fiber nonwoven fabric 11 will be provided below.

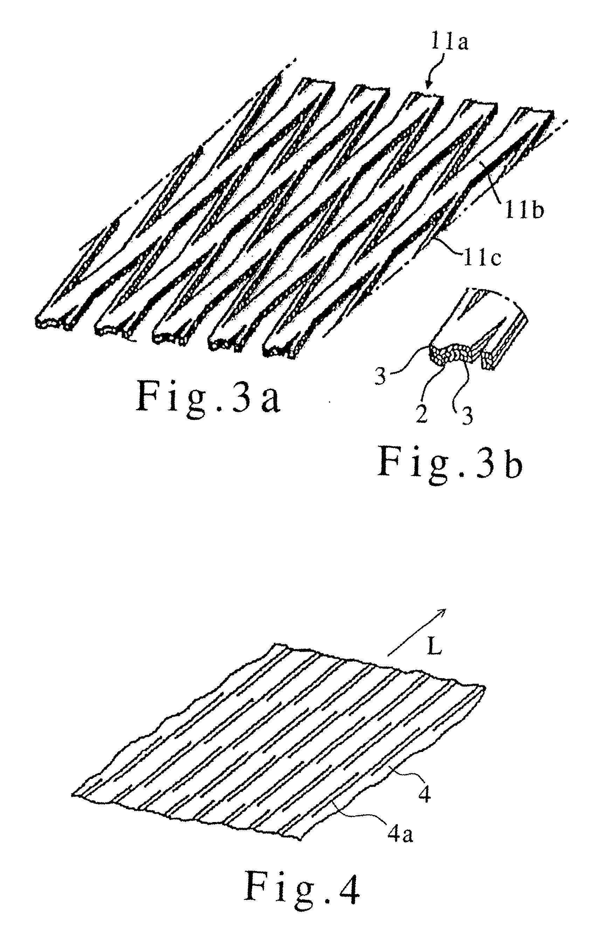

As shown in Figs. 1 and 2, split-fiber nonwoven fabric 11 is formed of two uniaxial orientation reticular films 11a, which are laminated together longitudinally and transversely. As shown in Fig. 3b, uniaxial orientation reticular film 11a is a film having a three-layer construction in which onto both faces of layer 2 made of a first thermoplastic resin having a high melting point, layers 3 made of a second thermoplastic resin having a melting point lower than that of the first thermoplastic resin are laminated. As shown in Fig. 3a, film 11a is constituted by a plurality of trunk fibers 11b extending in parallel to each other and branch fibers 11c extending so as to intersect with trunk fibers 11b thereby mutually joining neighboring trunk fibers 11b together.

The thickness of layer 3 made of the second thermoplastic resin should preferably be equal to or less than 50% and desirably be equal to or less than 40% of the whole thickness of uniaxial orientation reticular film 11a. Further, although 5µm in thickness of layer 3 made of the second thermoplastic resin would be sufficient for satisfying various properties such as bonding strength of the two uniaxial orientation reticular films 11a upon heat-fusion thereof and so on, the thickness of layer 3 may preferably be selected from the range of 10 - 100µm.

The method of manufacturing uniaxial orientation reticular film 11a may be, for example, described as follows.

First, an original film having a triple layer construction in which layers 3 made of the second thermoplastic resin are laminated onto the both surfaces of layer 2 made of the first thermoplastic resin is fabricated by the extrusion such as a multilayer inflation method and a multilayer T die method. Subsequently, as shown in Fig. 4, this original film 4 is subjected to either a split-fiber process by the use of a splitter or to slitting process by the use of hot blades in which cross-stitch-like many parallel slits 4a extending longitudinally (a direction shown by an arrow L in Fig. 4) are formed. Then, film 4 with slits 4a is stretched in longitudinal direction to thereby obtain uniaxial orientation reticular film 11a in which trunk fibers 11b are aligned in approximately longitudinal direction.

A stretching magnification (orientation magnification) of film 11a is preferably 1.1 - 15 times. When the stretching magnification is less than 1.1 times, the mechanical strength of the fabric made would be insufficient. While, when the stretching magnification is larger than 15 times, it becomes difficult to stretch the film by an ordinary method and such a problem occurs in which an expensive machine for the stretching operation is required. The stretching method may be either a rolling method or a roll stretching method. When the roll stretching method is adopted, especially a pseudo uniaxial stretching method would be preferable.

The rolling method referred to in this specification should be understood as a method in which a thermoplastic resin film is allowed to pass through between two heating rollers arranged to oppose to one another with a gap smaller than the thickness of the thermoplastic resin film so as to be compressed at a temperature lower than the melting point (the softening point) of the resin film to thereby allow the compressed resin film to be subjected to a stretching action for increasing the length thereof in response to a reduction in the thickness of the resin film.

Also, the pseudo uniaxial stretching method should be understood as a method in which a thermoplastic resin film is allowed to sequentially pass through between paired low-speed rollers and between paired high-speed rollers (accessing rollers) placing at a smallest possible distance from the paired low-speed rollers so as to mainly reduce its thickness while preferably restraining shrinkage of the film in its width direction to thereby allow the film to be subjected to the stretching action. When it is assumed that the width of a film before stretching is W', the width of the same film after uniaxial stretching is W, and the stretching magnification is V, the value of X obtained from an equation, i.e., X = 1- (V^{-1/2}) X (W'/W) is an index number indicating a coefficient of pseudo uniaxial property, and therefore it should be understood that when the value of X (0 < X < 1) becomes larger, the coefficient of pseudo uniaxial property becomes larger.

Finally, two uniaxial orientation reticular films 11a obtained by the afore-described manufacturing method are superposed on one another in a manner such that the orientation axis of one of the two films 11a is perpendicular to that of the other of the two films 11a. Then, the two films 11a are subjected to heating so as to be thermally fused and combined with one another, and as a result, split-fiber nonwoven fabric 11 can be acquired. At the time of thermal fusion of the films, the superposed uniaxial orientation reticular films 11a are supplied between a pair of heating cylinders so as to be thermally fused and combined together at a temperature equal to or lower than the melting point of the first thermoplastic resin and equal to or higher than the melting point of the second thermoplastic resin in a manner such that appropriate fixing is applied to the superposed films so as to prevent shrinkage of the films in width direction without losing of application of a desired stretching effect to layer 2 made of the first thermoplastic resin.

As shown in Fig. 2, when split-fiber nonwoven fabric 11 is made by the use of identical uniaxial orientation reticular films 11a, the thermal fusion and combining of uniaxial orientation reticular films 11a is carried out by the employment of a cross overlaying machine. At the time of the thermal fusion and combining by the use of the cross overlaying machine, one of uniaxial orientation reticular films 11a is allowed to be directly supplied to the cross overlaying machine, while the other of uniaxial orientation reticular films 11a is initially cut into pieces each of which has a length equal to the width thereof, and each piece of uniaxial orientation reticular films 11a is supplied to the cross overlaying machine from a direction perpendicular to the direction of supply of the above-mentioned one of uniaxial orientation reticular films 11a. Therefore, in the state shown in Fig. 2, joints of the other of uniaxial orientation reticular films 11a repeatedly appear at an equal interval.

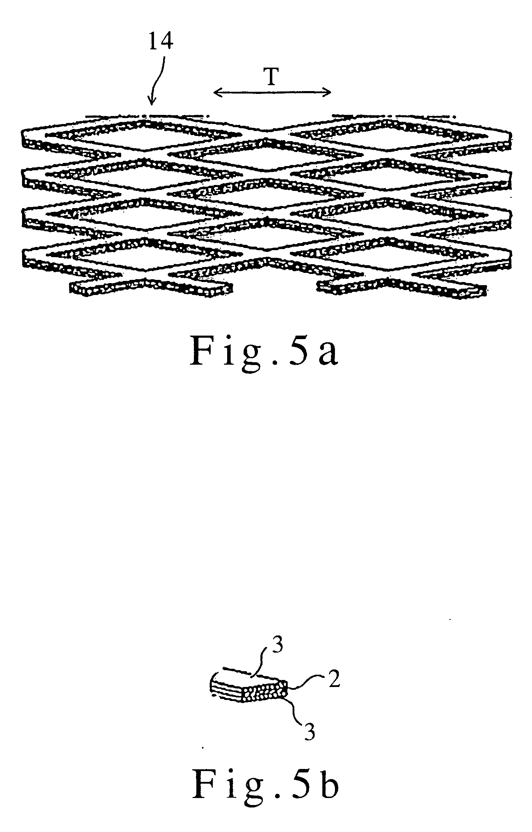

If appearance of the joints are not desirable, uniaxial orientation reticular film 11a as shown in Fig. 3a and uniaxial orientation reticular film 14 as shown in Fig. 5a should be laminated together to form a split-fiber nonwoven fabric. It should be understood that uniaxial orientation reticular film 14 as shown in Fig. 5a may be fabricated by the use of the original film that is identical with one used for fabricating uniaxial orientation reticular film 11a as shown in Fig. 3a. Namely, as shown in Fig. 5b, uniaxial orientation reticular film 14 is constituted by layer 2 made of the first thermoplastic resin having a high melting point and layers 3 laminated to the opposite surfaces of layer 2 and made of the second thermoplastic resin having a melting point lower than that of the first thermoplastic resin layer. The original film constituted by layers 2 and 3 is then subjected to split-fiber processing or slitting processing for forming slits, which are arranged in cross stitch manner and extending in a transverse direction, i.e., a ,direction shown by an arrow T in Fig. 5a, and is further subjected to a stretching processing for stretching the film in the transverse direction to thereby obtain uniaxial orientation reticular film 14 in which fibers are alinged in approximately transverse direction. Then, when uniaxial orientation reticular film 11a stretched in a longitudinal direction and uniaxial orientation reticular film 14 stretched in a transverse direction are laminated to one another, a split-fiber nonwoven fabric having no joints therein can be obtained.

The resin used for constituting uniaxial orientation reticular films 11a and 14 may be, for example, one of substances including polyolefin such as polyethylene and polypropylene, copolymer of these substances, polyester such as polyethyleneterephthalate and polybutyleneterephthalate, copolymer of these substances, polyamide such as nylon 6 and nylon 66, copolymer of these substances, poly vinyl chloride, methacrylic acid or polymer and copolymer of the derivative of methacrylic acid, polystyrene, polysulfone, polytetrachloroethylenepolycarbonate, and polyurethane. Particularly, polyolefin, copolymer thereof, polyester, and copolymer thereof, which are easily subjected to the split-fiber processing, respectively, are preferred. Further, a difference between the melting point of the first thermoplastic resin and that of the second thermoplastic resin is required to be equal to or more than 5°C from the reason for manufacture, and should preferably be 10 through 50°C.

As described above, the employment of split-fiber nonwoven fabric 11 having the reticular construction therein enables it to obtain high nail strength and high tensile strength by laminating spun bonded nonwoven fabric 13 onto only one surface of film 12 and not onto both surfaces. As a result, since spun bonded nonwoven fabric 13 having a small basis weight can be employed, it is possible to achieve acquirement of a more lightweight vapor-permeable and water-resistant sheet 1 having an excellent workability during the laying operation. Further, since spun bonded nonwoven fabric 13 is laminated onto one surface of film 12, and since split-fiber nonwoven fabric 11 has a reticular construction therein, the breathability and vapor permeability of film 12 is not deteriorated. Namely, as vapor-permeable and water-resistant sheet 1 can have high strength but yet small basis weight, and excellent vapor permeability and water-resistance, it can be optimum for being used as a roofing material.

Particularly, upon being used as the roofing material, vapor-permeable and water-resistant sheet 1 ,should preferably have vapor permeability of equal to or more 1,000 gH₂O/day·m² and water-resistance pressure of equal to or more 500cm·H₂O. Further, the breathability should preferably be equal to or more than 30s/100ml. Furthermore, from the viewpoint of the physical strength, vapor-permeable and water-resistant sheet 1 should preferably have nail strength of equal to or more than 100 N/10cm and tensile strength of equal to or more than 300 N/50cm.

Now, the description of an example of the manufacturing method of the above described vapor-permeable and water-resistant sheet 1 will be provided hereinbelow.

First, spun bonded nonwoven fabric 13 is superposed on film 12, and both are bonded together by the use of either embossing rollers or mirror face rollers to obtain a composite web. Subsequently, split-fiber nonwoven fabric 11 is superposed onto film 12 of the composite web, and is compressed to the composite web by mirror face rollers to obtain vapor-permeable and water-resistant sheet 1.

The compression bonding of spun bonded nonwoven fabric 13 and split-fiber nonwoven fabric 11 onto the opposite faces of film 12 may be achieved by an ordinary hot or thermal bonding method. Since spun bonded nonwoven fabric 13 is bonded, by compression, to only one of the faces of film 12, it is possible to prevent the breathability and vapor permeability of film 12 from being deteriorated to the minimum limit. In order to achieve less deterioration in the breathability and the vapor permeability of film 12, the compression bonding of spun bonded nonwoven fabric 13 and split-fiber nonwoven fabric 11 to film 12 should preferably be executed at a temperature that does not cause any deterioration of the breathability and the vapor permeability of film 12. The temperature causing no deterioration in the breathability and the vapor permeability of film 12 is preferably equal to or less than 160°C and more preferably 100 through 150°C in the case where film 12 is formed of polyolefin base porous film.

The compression bonding of spun bonded nonwoven fabric 13 to film 12 and the compression bonding of the composite web of these two elements to split-fiber nonwoven fabric 11 may be achieved by the ultrasonic fusion bonding method other than the thermal compression bonding method. The ultrasonic fusion bonding method is effective for preventing the breathability and the vapor permeability of film 12 from being deteriorated, and therefore is remarkably effective for the bonding of film 12.

In the described embodiment of the present invention, an explanation of an example of vapor-permeable and water-resistant sheet 1 employing split-fiber nonwoven fabric as a reticular reinforcement layer has been provided. However, the formation of the reticular reinforcement layer is not limited to the described split-fiber nonwoven fabric 11, and various kinds of substitutes might be employed even if deterioration in various physical properties such as water-resistance, vapor permeability, and diverse strengths, which are indispensable for vapor-permeable and water resistant sheet 1 could be prevented. Several examples of such substitutes are described below.

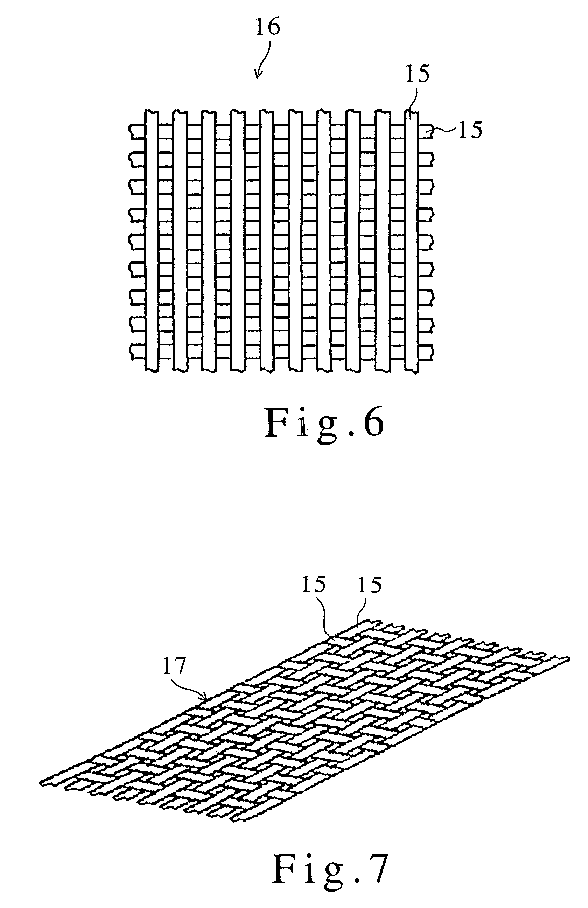

Figure 6 is a plan view of a nonwoven fabric made of uniaxially stretched multilayer tape adapted for being used as a reticular reinforcement layer, and Fig. 7 is a perspective view of a woven fabric made of uniaxially stretched multilayer tape adapted for being used as a reticular reinforcement layer.

These nonwoven fabric 16 and woven fabric 17 are made of uniaxially stretched multilayer tape 15 that is made by severing the original film identical with that used for fabricating uniaxial orientation reticular film 11a shown in Fig. 2, in a stretched direction after the original film is uniaxially stretched under a stretching magnification of 1.1 - 15 times, preferably, 3 - 10 times. The severing of the original film may be executed before the uniaxial stretching of the original film. Nonwoven fabric 16 as shown in Fig. 6 is fabricated by arranging these uniaxially stretched multilayer tapes 15 at a constant space and in parallel with one another so as to form a layer, and by laminating such layers so that respective layers are alternately directed transversely and longitudinally.

Woven fabric 17 as shown in Fig. 7 is fabricated by weaving uniaxially stretched multilayer tapes 15 longitudinally and transversely.

When nonwoven fabric 16 and woven fabric 17 are employed for forming a reticular reinforcement layer, gaps in uniaxially stretched multilayer tapes 15 acts as breathing portions, and therefore any deterioration in the breathability of vapor-permeable and water-resistant sheet 1 does not occur. Also, since uniaxially stretched multilayer tape 15 is stretched in one direction such as uniaxial orientation reticular film 11a shown in Fig. 3a, it can have physical strength sufficient for acting as a reinforcement construction.

Further, other than nonwoven fabric 16 and woven fabric 17, a perforated film made by forming many through-holes in the above described original film either by the use of a hot needle or by the punching method might be used for constituting the reticular reinforcement layer. Of course, in this case, the original film is stretched for obtaining necessary physical strength before or after the formation of the through-holes.

A more concrete description of the present invention will be provided below, on the basis of non-limitative examples.

### (Example 1)

A SYNTEX (the trade name), which is a polypropylene nonwoven fabric manufactured by Mitsui Chemicals Inc. in Japan, was prepared as spun bonded nonwoven fabric. The basis weight of this nonwoven fabric was 30 g/m². As a film, a porous film made of polypropylene was prepared. The basis weight of this porous film was 36 g/m². As a reinforcement of reticular construction, a PP CLAF (the trade name), which is split-fiber nonwoven fabric made of polypropylene and manufacture by NISSEKI PLASTO Co. Ltd. in Japan was prepared. The basis weight of this split-fiber nonwoven fabric was 36 g/m².

The spun bonded nonwoven fabric and the porous film were initially superposed on each other. Then, both are supplied between an emboss roller and a receipt roller in a manner such that the spun bonded nonwoven fabric faces the emboss roller and the porous film faces the receipt roller, so that the spun bonded nonwoven fabric and the porous film are bonded together by compression. At this stage, the bonding of the fabric and film was carried out at a temperature of 135°C, the supply speed of the spun bonded nonwoven fabric and the porous film was 2 m/min, and the line pressure was 5 kg/cm.

Thereafter, a split-fiber nonwoven fabric was superposed on the porous film of the composite sheet obtained by the compression bonding. Then, both are supplied between a mirror surface roller and rubber roller in a manner such that the composite sheet faces the mirror surface roller and the split-fiber nonwoven fabric faces the rubber roller, so that the composite sheet and the split-fiber nonwoven fabric were bonded together by compression. Thus, a vapor-permeable and water-resistant sheet was fabricated. The bonding of the composite sheet and the split-fiber nonwoven fabric was carried out at a temperature of 135°C, the supply speed of the composite sheet and the split-fiber nonwoven fabric was 5 m/min, and the line pressure was 2 kg/cm.

### (Example 2)

A vapor-permeable and water-resistant sheet was fabricated by a method identical with the above example 1 except that a spun bonded nonwoven fabric having a basis weight of 50 g/m² was employed.

### (Comparative example 1)

A vapor-permeable and water-resistant nonwoven fabric was fabricated by a method identical with the above example 1 except that a spun bonded nonwoven fabric having a basis weight of 15 g/m² was employed.

### (Comparative example 2)

A spun bonded nonwoven fabric having the basis weight of 30 g/m² was employed instead of the split-fiber nonwoven fabric, and bonding of this spun bonded nonwoven fabric and the afore-formed composite sheet was acquired by the use of the emboss roller instead of the mirror face roller. The other condition for the fabrication of a vapor-permeable and water-resistant sheet was identical with the above-mentioned example 1.

With the vapor-permeable and water-resistant sheets of the example 1, the example 2, the comparative example 1 and the comparative example 2, the vapor permeability (JIS A 1324), the breathability (JIS P 8117), the water-resistance pressure (JIS L 1092 (A Method, the hydrostatic pressure method)), the tensile strength (JIS L10926), and the nail strength were conducted, respectively, in order to evaluate the vapor permeability, the windproof, the waterproof, and workability of these vapor-permeable and water-resistant sheets.

At this stage, the nail strength was measureed by the following method. Namely, eight rectangular test pieces having long sides of 300 mm and short sides of 100 mm were served from each of the four obtained vapor-permeable and water-resistant sheets. More specifically, a first group of four of the eight test pieces were prepared so that the long sides coincide with the lengthwise direction of the vapor-permeable and water-resistant sheet, and a second group of four of the eight test pieces were prepared so that the long sides coincide with the widthwise direction of the vapor-permeable and water-resistant sheet. Thus, with the gathered test pieces, an upper portion of one of the short sides of each test piece was clipped by an upper clipping tool, and a lower portion of the other of the short sides of each test piece was inserted in a lower clipping tool. The lower clipping tool was provided with two holes spaced apart in the widthwise direction and permitting nails to be inserted therein, respectively. Thus, through the two holes of the lower clipping tool, nails, each having the diameter of 2 mm, were inserted so as to pierce the test piece. The centers of the two holes of the lower clipping tool are arranged to be spaced 33.0 mm apart from one another, and the nails were pierced into the test piece at positions which are spaced 200 mm in a direction along the long sides of the test piece from the upper portion clipped by the upper clipping tool. Then, the lower clipping tool was moved down at a speed of 100 mm/min so that a tensile load is applied to the test piece until the test piece was torn away, and the maximum tensile load was measured. The above test was carried out with respect to each of the eight test pieces to measure the respective maximum stretching loads. Then, the measured eight maximum loads were averaged, and the averaged value was defined as the nail strength.

The results of the measurements conducted and the results of the evaluation are indicated in Table 1 below.

**(Table 1)**

| | | Ex. 1 | Ex. 2 | Comp. Ex.1 | Comp. Ex.2 |
|---|---|---|---|---|---|
| (1) | Vapor Permeability (gH₂O/day·m²) | 2,000 | 1,500 | 2,000 | 850 |
| | Breathability (s/100 ml) | 80 | 50 | 80 | 40 |
| | Water-resistance Press. (cm·H₂O) | 150 < | 150 < | 150 < | 150 < |
| | Tensile Strength (N/5cm) | 350 | 370 | 320 | 200 |
| | Nail Strength (N/10cm²) | 160 | 200 | 110 | 90 |
| (2) | Vapor Permeability Property | ○ | ○ | ○ | × |
| | Windproof Property | ○ | ○ | ○ | ○ |
| | Waterproof Property | ○ | ○ | ○ | ○ |
| | Workability | ○ | ○ | × | × |

In the above Table 1, (1) indicates respective measuring items, and (2) indicates the judgment conducted.

The judgment of the Table 1 was conducted on the reference stated below.

Concerning the vapor permeability property, if the value of the vapor permeability is equal to or more than 1,000 gH₂O/day· m², it was judged that the vapor permeability property is ○, and if less than that value, × should be applied.

Concerning the windproof property, if the value of the breathability is equal to or more than 30 s/100ml, it was judged that the windproof property is ○, and if less than that value, × should be applied.

Concerning the waterproof property, if the value of the water-resistance pressure is equal to or more than 100 cm·H₂O, it was judged that the waterproof property is ○, and if less than that value, × should be applied.

Concerning the workability, if the value of the tensile strength is equal to or more than 300 N/5cm, and the value of the nail strength is equal to or more than 130 N/10 cm², it was judged that the working ability is ○, and if less than these values, × should be applied.

From the Table 1, it is understood that the examples 1 and 2 indicated good test results about the vapor permeability, the windproof, the waterproof, and the working ability.

On the other hand, the comparative example 1 indicated that the nail strength is insufficient, and the working ability is not good. Further, the comparative example 2 indicated that the value of the vapor permeability is small, and accordingly it was judged that sufficient vapor permeability cannot be obtained. In addition, both the tensile strength and the nail strength of the comparative example 2 are insufficient, and the working ability is not good.

Although certain preferred embodiments of the present invention have been shown and described, it should be understood that various changes and modifications may be made without departing from the spirit or scope of the appended claims.

## Claims

1. A vapor-permeable and water-resistant sheet comprising:
a film layer having vapor permeability and water-resistance;
a surface protection layer laminated onto one surface of said film layer and made of a spun bonded nonwoven fabric having a basis weight of equal to or more than 20 g/m² and equal to or less than 70 g/m²; and
a reinforcement layer of reticular construction, laminated onto the other surface of said film layer.

2. The vapor-permeable and water-resistant sheet according to claim 1, wherein vapor permeability is equal to or more than 1,000 gH₂O/day·m², and water-resistance pressure is equal to or more than 500 cm·H₂O.

3. The vapor-permeable and water-resistant sheet according to claim 1, wherein breathability is equal to or more than 30 s/100 ml.

4. The vapor-permeable and water-resistant sheet according to claim 1, wherein nail strength is equal to or more than 130 N/10 cm.

5. The vapor-permeable and water-resistant sheet according to claim 1, wherein tensile strength is equal to or more than 300 N/5 cm.

6. The vapor-permeable and water-resistant sheet according to claim 1, wherein said spun bonded nonwoven fabric comprises constituent fibers, which are made either one of polypropylene or a copolymer of polypropylene and α-olefin.

7. The vapor-permeable and water-resistant sheet according to claim 1, wherein said spun bonded nonwoven fabric contains therein a UV absorbent.

8. The vapor-permeable and water-resistant sheet according to claim 1, wherein said film layer comprises a polyolefin base porous film having breathability of 30 through 3,000 s/100 ml, vapor permeability of 500 through 20,000 gH₂O/day·m², water-resistance pressure of equal to or more than 500 cm H₂O, the thickness of 10 through 200 µm, and minute pores having average diameter of 0.01 through 50µm, and porosity of 10 through 70%.

9. The vapor-permeable and water-resistant sheet according to claim 1, wherein said reinforcement layer comprises polyolefin, copolymer of polyolefin, polyester, or copolymer of polyester.

10. The vapor-permeable and water-resistant sheet according to claim 1, wherein said reinforcement layer has a thickness of 50 through 300µm and a basis weight of 13 through 60 g/m².

11. A method of manufacturing a vapor-permeable and water-resistant sheet comprising the steps of:
bonding, by compression, a surface protection layer made of spun bonded nonwoven fabric having a basis weight of equal to or more than 20 g/m² and equal to or less than 70 g/m², onto one surface of a film layer having vapor permeability and water-resistance; and
bonding, by compression, a reinforcement layer of reticular construction onto the other surface of said film layer onto which said spun bonded nonwoven fabric is laminated.

12. The method of manufacturing a vapor-permeable and water-resistant sheet according to claim 11, wherein at least the compression bonding of said surface protection layer onto said film layer implemented under a temperature, which does not deteriorate vapor permeability and breathability of said film layer.

13. The method of manufacturing a vapor-permeable and water-resistant sheet according to claim 12, wherein said film layer comprises a polyolefin base porous film and said temperature that does not deteriorate the vapor permeability and the breathability of said film layer is equal to or less than 150°C.

14. The method of manufacturing a vapor-permeable and water-resistant sheet according to claim 12, wherein the compression bonding of said surface protection layer and said reinforcement layer onto said film layer comprises a ultrasonic compression bonding.
